# EUROPÄISCHE PATENTSCHRIFT

(11) **EP 3 903 399 B1**
(45) Veröffentlichungstag und Bekanntmachung des Hinweises auf die Patenterteilung: **22.04.2026**
(21) Anmeldenummer: 19829562.8
(22) Anmeldetag: 19.12.2019
(51) Int. Cl.: H02J 3/00, H02J 3/32, H02J 3/38, H02J 3/46

(54) **VERFAHREN ZUR BEREITSTELLUNG VON REGELLEISTUNG FÜR EIN WECHSELSPANNUNGSNETZ MITTELS EINER ENERGIEERZEUGUNGSANLAGE**
METHOD FOR PROVIDING CONTROL POWER FOR AN ALTERNATING VOLTAGE SYSTEM BY MEANS OF AN ENERGY-GENERATING PLANT
PROCÉDÉ POUR METTRE À DISPOSITION UNE PUISSANCE DE RÉGULATION À UN RÉSEAU À TENSION ALTERNATIVE AU MOYEN D'UNE INSTALLATION DE PRODUCTION D'ÉNERGIE

(30) Priorität: 29.12.2018 DE 102018133707
(43) Veröffentlichungstag der Anmeldung: 03.11.2021
(73) Patentinhaber: SMA Solar Technology AG, 34266 Niestetal (DE)
(72) Erfinder: KNOBLOCH, Andreas, 34121 Kassel (DE)
(86) Internationale Anmeldenummer: PCT/EP2019/086378
(87) Internationale Veröffentlichungsnummer: WO 2020/136085

(56) Entgegenhaltungen:
- EP-A1- 3 480 914
- EP-B1- 2 759 033
- EP-B1- 3 017 523
- WO-A2-2013/041534
- DE-A1- 102015 101 738
- DE-A1- 102016 225 697
- DE-A1- 102017 129 082

## Beschreibung

### TECHNISCHES GEBIET DER ERFINDUNG

Die Erfindung betrifft ein Verfahren zur Bereitstellung von Regelleistung für ein Wechselspannungsnetz mittels einer Energieerzeugungsanlage mit einem Photovoltaikgenerator und einem Energiespeicher.

### STAND DER TECHNIK

In einem Wechselspannungsnetz, das als überregionales Verbundnetz aufgebaut ist, können aufgrund eines Ungleichgewichts zwischen eingespeister und entnommener elektrischer Leistung Abweichungen der Netzfrequenz von einer Nennfrequenz des Wechselspannungsnetzes auftreten. Dem Ungleichgewicht und damit der Frequenzabweichung kann entgegengewirkt werden, indem Vorrichtungen, die elektrische Leistung in das Wechselspannungsnetz einspeisen und/oder aus dem Wechselspannungsnetz entnehmen können, die von ihnen eingespeiste bzw. entnommene Leistung geeignet anpassen. Insbesondere kann bei Frequenzen, die über der Nennfrequenz liegen, die eingespeiste Leistung reduziert bzw. die entnommene Leistung erhöht werden, während bei Frequenzen, die unter der Nennfrequenz liegen, die eingespeiste Leistung erhöht bzw. die entnommene Leistung reduziert wird.

Die jeweilige Änderung der Leistung einer Energieerzeugungsanlage in direkter oder indirekter Reaktion auf ein Leistungsungleichgewicht im Stromnetz bzw. auf eine daraus resultierende Frequenzabweichung wird üblicherweise als Regelleistung bezeichnet. Die Regelleistung wird von dedizierten Netzbetriebsmitteln in Form einer Regelreserve vorgehalten und im Bedarfsfall für eine zeitlich begrenzte Dauer abgerufen. Die beim Regelleistungsabruf erbrachte Energie wird als Regelenergie oder Regelarbeit bezeichnet. In Wechselspannungsnetzen, wie z.B. dem Europäischen Verbundnetz, ist die Erbringung dieser Regelleistung üblicherweise in zeitlich aufeinander aufbauenden und einander ablösenden Stufen unterschiedlicher Wirkungsweise organisiert.

Die erste Regelungsstufe, die sogenannte Momentanregelung oder Momentanreserve, dient der Begrenzung der Frequenzänderungsrate. Die Momentanreserve ist in gegenwärtigen Stromnetzen eher als eine Netzeigenschaft als eine aktive Regelung realisiert, und wird durch Vorrichtungen verursacht, die ihre Leistung in direkter und unmittelbarer Reaktion auf eine Frequenzänderung ändern. Insbesondere rotierende Schwungmassen von Generatoren oder Motoren erzeugen aufgrund ihrer Trägheit eine dem Leistungsungleichgewicht unmittelbar entgegenwirkende Momentanreserveleistung und begrenzen die Frequenzänderungsrate.

In der zweiten Regelungsstufe, der sogenannten Primärregelung, die der Frequenzhaltung dient und bei anhaltender Frequenzabweichung zum Tragen kommt, kommen Vorrichtungen zum Einsatz, die ihre Leistung anhand einer Kennlinie in Abhängigkeit von der Abweichung der Netzfrequenz von der Nennfrequenz gezielt einstellen. In der dritten Stufe, der sog. Sekundärregelung, wird einem voraussichtlich andauernden oder absehbaren Leistungsungleichgewicht im Wechselspannungsnetz geplant entgegengewirkt, indem Vorrichtungen von einer übergeordneten Steuereinrichtung angewiesen werden, ihre elektrische Leistung geeignet zu ändern. Die Sekundärregelung stellt Leistung und Energie zur Wiederherstellung der Netzfrequenz auf den Nennwert bereit und löst die zweite Stufe ab.

Aus dem Stand der Technik sind Vorrichtungen bekannt, die elektrische Leistung zwischen dem Wechselspannungsnetz und einem Energiespeicher austauschen. Derartige Vorrichtungen können dazu eingerichtet sein, Regelleistung der zweiten Regelungsstufe bereitzustellen, d.h. im Rahmen der Primärregelung auf ein Leistungsungleichgewicht zu reagieren und den Leistungsaustausch zwischen Wechselspannungsnetz und Energiespeicher entsprechend anzupassen, um dem Leistungsungleichgewicht entgegenzuwirken. Regelleistungskraftwerke haben mithin die Aufgabe, eine fest vereinbarte Menge an Regelleistung während einer fest vereinbarten Zeit bei Bedarf zur Verfügung zu stellen.

Weiterhin sind Photovoltaikanlagen bekannt, die in der Regel derart betrieben werden, dass den Photovoltaikgeneratoren der Photovoltaikanlage eine maximal mögliche Leistung entnommen und in das Wechselspannungsnetz eingespeist wird. Aufgrund der Volatilität und der schlechten Prognostizierbarkeit der PV-Leistung, die beispielsweise bei Einstrahlungsänderungen stark schwanken kann und insbesondere nachts gar nicht verfügbar ist, können Photovoltaikanlagen bisher nur eingeschränkt zur Stabilisierung des Wechselspannungsnetzes durch Bereitstellung von Regelleistung beitragen. Die WO 2013/041534 A2 zeigt eine Vorrichtung zur Bereitstellung von Regelleistung. Die DE 10 2015 101738 A1 zeigt ein Verfahren zum Betrieb einer Energieerzeugungsanlage.

### AUFGABE DER ERFINDUNG

Der Erfindung liegt die Aufgabe zugrunde, ein Verfahren zur Bereitstellung von Regelleistung für ein Wechselspannungsnetz mittels einer Energieerzeugungsanlage mit einem Photovoltaikgenerator und einem Speicher aufzuzeigen, mit dem Regelleistung für die Stabilisierung des Wechselspannungsnetzes kostengünstig und effizient zur Verfügung gestellt werden kann.

### LÖSUNG

Die Aufgabe wird durch ein Verfahren mit den Merkmalen des unabhängigen Patentanspruchs 1 sowie mit einer Energieerzeugungsanlage gemäß Anspruch 11 gelöst. Bevorzugte Ausführungsformen sind in den abhängigen Patentansprüchen definiert.

### BESCHREIBUNG DER ERFINDUNG

In einem Verfahren zur Bereitstellung von Regelleistung für ein Wechselspannungsnetz für einen vorgegebenen zukünftigen Zeitraum mit einem Regelleistungsbereich mittels einer Energieerzeugungsanlage umfasst die Energieerzeugungsanlage einen Photovoltaikgenerator und einen Energiespeicher. Die Energieerzeugungsanlage tauscht eine elektrische Gesamtleistung mit dem Wechselspannungsnetz aus. Die ausgetauschte Gesamtleistung wird in Abhängigkeit von einer aktuellen PV-Maximalleistung, einer vorgebbaren PV-Grundleistung zwischen Null und der PV-Maximalleistung und einer bereitgestellten bzw. angeforderten Regelleistung eingestellt. Der Regelleistungsbereich weist eine maximale positive Regelleistung und eine maximale negative Regelleistung auf, die als Abweichungen von der Grundgesamtleistung in dem vorgegebenen zukünftigen Zeitraum durch die Energieerzeugungsanlage eingestellt werden können und auf Anforderung eingestellt werden. Dabei haben die maximale positive und die maximale negative Regelleistung bevorzugt denselben Betrag, so dass eine symmetrische Regelleistung für den vorgegebenen zukünftigen Zeitraum bereitgestellt wird. Das Verfahren umfasst folgende Schritte:
- Ermittlung eines optimalen Regelleistungsbereichs für den vorgegebenen zukünftigen Zeitraum unter Berücksichtigung der aktuellen PV-Maximalleistung und eines aktuellen Ladezustandes des Energiespeichers;
- wenn keine Regelleistung angefordert ist: Einspeisen einer Grundgesamtleistung, die die PV-Grundleistung umfasst;
- wenn negative Regelleistung angefordert ist: Reduzieren der PV-Leistung gegenüber der PV-Grundleistung; und
- wenn positive Regelleistung angefordert ist: Entnahme einer Batterieleistung aus der Batterie, wenn die angeforderte positive Regelleistung größer als die Differenz zwischen PV-Maximalleistung und PV-Grundleistung ist.

Durch das erfindungsgemäße Verfahren kann eine Energieerzeugungsanlage optimal zur Bereitstellung von Regelleistung genutzt werden. Dabei wird eine negative Regelleistung durch ein Reduzieren der PV-Leistung realisiert, wobei dieses Reduzieren ein Rückspeisen in den Photovoltaikgenerator umfassen kann. Dadurch steht eine negative Regelleistung zur Verfügung, die jederzeit mindestens die Nennleistung des Photovoltaikgenerators betragen kann (vorbehaltlich einer entsprechend leistungsfähigen Anbindung an das Wechselspannungsnetz). Gleichzeitig kann die positive Regelleistung optimal von dem Energiespeicher realisiert werden. Dadurch, dass der Energiespeicher nicht zur negativen Regelleistung beitragen muss, kann ein Großteil seiner Speicherkapazität zur Bereitstellung positiver Regelleistung vorgehalten werden.

Die Grundgesamtleistung kann eine Batterieleistung zum Laden des Energiespeichers beinhalten, wenn der Energiespeicher geladen werden kann. Dadurch ist die Grundgesamtleistung gegenüber der PV-Grundleistung reduziert, indem ein Teil der PV-Leistung zum Laden des Energiespeichers verwendet wird, sofern der Energiespeicher nicht vollgeladen ist. Wenn negative Regelleistung angefordert ist und der Energiespeicher geladen werden kann, kann zunächst die Batterieleistung zum Laden des Energiespeichers erhöht werden, bevor die PV-Leistung gegenüber der PV-Grundleistung reduziert wird. Dadurch wird die umweltfreundlich vom Photovoltaikgenerator erzeugte Energie optimal zur Ladung des Energiespeichers genutzt.

In einer Ausführungsform des Verfahrens kann die PV-Grundleistung der PV-Maximalleistung entsprechen. Der Photovoltaikgenerator kann damit optimal betrieben werden und die maximal mögliche Energie umweltfreundlich erzeugen, solange die PV-Leistung nicht zur Reduzierung der Gesamtleistung der Energieerzeugungsanlage zur Bereitstellung negativer Regelleistung reduziert wird.

In einer alternativen Ausführungsform des Verfahrens kann die PV-Grundleistung kleiner als die PV-Maximalleistung sein, wobei die PV-Leistung gegenüber der PV-Grundleistung erhöht wird, wenn positive Regelleistung angefordert ist. Wenn die angeforderte positive Regelleistung größer als die Differenz zwischen PV-Grundleistung und PV-Maximalleistung ist, findet die insofern ergänzende Entnahme einer Batterieleistung aus dem Energiespeicher statt, so dass die Gesamtleistung die angeforderte positive Regelleistung umfasst.

In einer vorteilhaften Ausführungsform beträgt die PV-Grundleistung zwischen 40% und 60% der PV-Maximalleistung. Damit stehen zwischen 60% und 40% der PV-Maximalleistung als zusätzliche positive Regelleistung zur Verfügung.

In dem erfindungsgemäßen Verfahren kann die angeforderte Regelleistung als Funktion einer Abweichung einer Momentanfrequenz von einer Nennfrequenz des Wechselspannungsnetzes und/oder einer Änderungsrate der Momentanfrequenz mittels einer Kennlinie bestimmt werden. Dabei kann die Kennlinie derart gestaltet sein, dass positive Regelleistung angefordert wird, wenn die Momentanfrequenz kleiner als die Nennfrequenz und/oder die Änderungsrate negativ ist, und dass negative Regelleistung angefordert wird, wenn die Momentanfrequenz größer als die Nennfrequenz und/oder die Änderungsrate positiv ist. Dadurch kann die Energieerzeugungsanlage autark auf Leistungsungleichgewichte im Wechselspannungsnetz reagieren, die sich insbesondere als Abweichungen der Netzfrequenz von der Nennfrequenz manifestieren können.

In einer alternativen Ausführungsform kann die angeforderte Regelleistung von einer übergeordneten Steuerung an die Energieerzeugungsanlage vorgegeben werden. Dadurch kann die Energieerzeugungsanlage bei konkretem Bedarf derart gesteuert werden, beispielsweise von einem Netzbetreiber, dass ein Leistungsungleichgewicht von der übergeordneten Steuerung gezielt ausgeglichen wird.

Der Begriff "Bereitstellung" ist in diesem Zusammenhang so zu verstehen, dass zugesichert wird, dass eine angebotene Regelleistung in dem zukünftigen Zeitraum eingestellt werden kann und auch wird, wenn sie tatsächlich in dem zukünftigen Zeitraum angefordert wird.

In einer Ausführungsform des Verfahrens kann vor dem zukünftigen Zeitraum, in dem Regelleistung bereitgestellt wird, eine Prognose für die PV-Maximalleistung im vorgegebenen zukünftigen Zeitraum, beziehungsweise ein Verhältnis der PV-Nennleistung zur Nennleistung des Energiespeichers berücksichtigt werden. Beispielsweise kann umso mehr Regelleistung angeboten werden, je höher die aktuelle und prognostizierte PV-Maximalleistung ist; andererseits kann die angebotene Regelleistung durch die PV-Nennleistung begrenzt sein, wenn nur diese zur Bereitstellung negativer Regelleistung zur Verfügung steht, beispielsweise nachts bei vollgeladenem Energiespeicher.

In einer Ausführungsform des Verfahrens entspricht die Grundgesamtleistung der PV-Maximalleistung oder ist dazu proportional, so dass etwaige Variationen der PV-Maximalleistung zu entsprechenden Variationen der Grundgesamtleistung führen. Eine angeforderte Regelleistung kann in diesem Fall als Abweichung von der PV-Maximalleistung bereitgestellt werden, die ohne Anforderung von Regelleistung eingespeist würde.

In einer alternativen Ausführungsform des Verfahrens weist die Grundgesamtleistung einen konstanten Wert auf. Wenn keine Regelleistung angefordert ist und die PV-Maximalleistung größer als die Grundgesamtleistung ist, umfasst die Grundgesamtleistung dann ausschließlich PV-Leistung. Eine etwaige Differenz zwischen der aktuellen PV-Leistung und der konstanten Grundgesamtleistung kann dann durch Austausch elektrischer Leistung mit dem Energiespeicher ausgeglichen werden. Dadurch ist das Verhalten der Energieerzeugungsanlage besser planbar, indem zu jeder Zeit ein definierter Leistungsaustausch mit dem Wechselspannungsnetz stattfindet, der insbesondere unabhängig von etwaigen kurzfristigen, beispielsweise witterungsbedingten Änderungen der PV-Maximalleistung ist.

In einer Ausführungsform des Verfahrens können der Photovoltaikgenerator und der Energiespeicher elektrische Leistung untereinander und/oder jeweils bidirektional mit dem Wechselspannungsnetz austauschen. Konkret kann die Energieerzeugungsanlage dazu die elektrische Gesamtleistung über genau einen gemeinsamen Netzanschlusspunkt mit dem Wechselspannungsnetz austauschen. Alternativ können der Photovoltaikgenerator und der Energiespeicher ihre jeweilige elektrische Leistung über verschiedene, räumlich getrennte Netzanschlusspunkte mit dem Wechselspannungsnetz austauschen.

Es versteht sich, dass der Photovoltaikgenerator eine Vielzahl von Teilgeneratoren umfassen kann, die über eine entsprechende Vielzahl von Wechselrichtern mit dem Wechselspannungsnetz verbunden sein können. Ebenso kann der Energiespeicher eine Vielzahl von Batterien umfassen, die über eine Vielzahl von Umrichtern mit dem Wechselspannungsnetz verbunden sind. Dabei können der Photovoltaikgenerator und der Energiespeicher in demselben oder in unterschiedlichen Ortsnetzen oder auf derselben oder unterschiedlichen Netzebenen mit dem Wechselspannungsnetz verbunden sein.

In einer vorteilhaften Ausführungsform des Verfahrens empfängt eine Steuerungseinheit aktuelle Betriebsdaten des Photovoltaikgenerators und des Energiespeichers und gibt Sollwerte für die jeweils auszutauschende Leistung für den Betrieb des Photovoltaikgenerators und des Energiespeichers vor. Dabei kann die Steuerungseinheit Teil der Energieerzeugungsanlage sein, insbesondere wenn diese über einen einzigen gemeinsamen Netzanschlusspunkt mit dem Wechselspannungsnetz verbunden ist, oder übergeordnet angeordnet sein und über eine Kommunikationsleitung mit dem Photovoltaikgenerator und dem Energiespeicher verbunden sein. Eine derart angeordnete Steuerungseinheit kann eine einheitliche Schnittstelle zu einer weiter übergeordneten Steuerung aufweisen, die beispielsweise für den Betrieb des Wechselspannungsnetzes insgesamt zuständig ist und insofern einen Netzbetreiber repräsentiert.

Die Energieerzeugungsanlage kann mindestens zwei Energiespeicher aufweist, wobei der Photovoltaikgenerator und der erste Energiespeicher Regelleistung für eine Primärregelung des Wechselspannungsnetzes bereitstellen, während der zweite Energiespeicher Regelleistung für eine Momentanregelung des Wechselspannungsnetzes bereitstellt.

Insbesondere kann der zweite Energiespeicher eine Momentanregelleistung über einen spannungseinprägenden Wechselrichter mit dem Wechselspannungsnetz austauschen. Mittels eines derartigen Verfahrens ist die Energieerzeugungsanlage in der Lage, sowohl zur der Momentanregelung als auch zur Primärregelung des Wechselspannungsnetzes optimal beizutragen.

Eine Energieerzeugungsanlage zur Bereitstellung von Regelleistung für ein Wechselspannungsnetz umfasst einen Photovoltaikgenerator, einen Energiespeicher und eine Steuerungseinheit. In einer erfindungsgemäßen Energieerzeugungsanlage ist die Steuerungseinheit dazu eingerichtet, die Energieerzeugungsanlage mit einem Verfahren gemäß der voranstehenden Beschreibung zu betreiben.

In einer Ausführungsform der Energieerzeugungsanlage sind der Photovoltaikgenerator und der Energiespeicher über einen gemeinsamen Netzanschlusspunkt mit dem Wechselspannungsnetz verbunden. Dabei kann der Netzanschlusspunkt einen Transformator mit einer netzseitigen Wicklung und mindestens zwei Wicklungen zum Anschluss des Photovoltaikgenerators und des Energiespeichers umfassen. Zudem kann die Energieerzeugungsanlage mehrere Photovoltaikgeneratoren und/oder mehrere Energiespeicher aufweisen, die über einen gemeinsamen bidirektionalen Wechselrichter mit dem Netzanschlusspunkt verbunden sind. Bevorzugt ist der Wechselrichter dabei über individuelle Gleichstromwandler mit den Photovoltaikgeneratoren bzw. den Energiespeichern verbunden. Durch die Verwendung eines gemeinsamen Wechselrichters wird sowohl die Anzahl benötigter Geräte aus der Verkabelungsaufwand verringert, wobei der Wechselrichter auf eine Gesamtleistung ausgelegt sein muss, die geringer als die Summe der Nennleistungen der einzelnen Wechselrichter in einer Energieerzeugungsanlage mit den Photovoltaikgeneratoren und den Energiespeichern individuell zugeordneten Wechselrichtern.

Vorteilhafterweise umfasst eine derartige Energieerzeugungsanlage eine Steuerungseinheit, die innerhalb der Energieerzeugungsanlage angeordnet ist und direkt mit dem Photovoltaikgenerator und dem Energiespeicher bzw. mit deren entsprechenden Steuerungen kommunizieren kann.

In einer alternativen Ausführungsform der Energieerzeugungsanlage ist die Steuerungseinheit kommunikativ über eine indirekte Verbindung über ein Netzwerk mit dem Photovoltaikgenerator und dem Energiespeicher bzw. mit deren Steuerungen verbunden, wobei der Photovoltaikgenerator und der Energiespeicher über verschiedene, räumlich getrennte Netzanschlusspunkte mit dem Wechselspannungsnetz verbunden sind.

Die Energieerzeugungsanlage kann mehrere Energiespeicher unterschiedlicher Bauart umfassen. Bevorzugt kann mindestens einer der Energiespeicher einen Lithium-Ionen-Akkumulator umfassen, der sich durch eine hohe Energiedichte auszeichnet. Besonders bevorzugt kann mindestens ein weiterer Energiespeicher einen Superkondensator umfassen, der eine im Vergleich mit dem Lithium-Ionen-Akkumulator geringere Energiedichte, jedoch eine höhere Leistungsdichte aufweist. Eine derart aufgebaute Energieerzeugungsanlage kann sowohl Primarregelleistung mittels des Lithium-Ionen in Verbindung mit dem Photovoltaikgenerator bereitstellen als auch mittels des Superkondensators zur Momentanregelung beitragen.

In einer weiteren Ausführungsform der Erfindung kann ein Regelleistungsbereich für einen vorgegebenen zukünftigen Zeitraum festgelegt werden, wobei die Regelleistung durch eine Energieerzeugungsanlage mit einem Photovoltaikgenerator und einem Energiespeicher bereitgestellt wird und der Regelleistungsbereich eine Grundgesamtleistung, eine maximale positive Regelleistung und eine maximale negative Regelleistung aufweist. Diese Ausführungsform kann folgende Schritte umfassen:
- Bestimmen der Grundgesamtleistung in Abhängigkeit einer aktuellen PV-Maximalleistung des Photovoltaikgenerators und eines Ladezustandes des Energiespeichers,
- Bestimmen der maximalen positiven Regelleistung in Abhängigkeit des Ladezustands des Energiespeichers,
- Bestimmen der maximalen negativen Regelleistung in Abhängigkeit der PV-Maximalleistung und einer maximal in den Photovoltaikgenerator rückspeisbaren PV-Nennleistung.

Dabei können die Grundgesamtleistung und die maximale positive Regelleistung derart bestimmt wird, dass ausgeschlossen ist, dass ein Anfordern der maximalen positiven Regelleistung für den vorgegebenen zukünftigen Zeitraum zu einem vollständigen Entladen des Energiespeichers führt, wobei die Grundgesamtleistung um eine Differenz geringer als die aktuelle PV-Maximalleistung bestimmt wird, wobei die Differenz umso größer ausfällt, je mehr der Ladezustand des Speichers von einem Volladezustand abweicht.

Die Erfindung kann durch folgende Merkmale weiter charakterisiert werden:
Zur Bereitstellung einer zu jeder Zeit sicher verfügbaren, definierten, maximalen positiven Regelleistung ist es vorteilhaft, den Energiespeicher der Energieerzeugungsanlage permanent im vollen Ladezustand zu betreiben. Damit die Energieerzeugungsanlage eine maximale negative Regelleistung auch bei vollgeladenem Speicher und nachts erreicht, kann in den Photovoltaikgenerator zurückgespeist werden, wobei die mögliche Rückspeiseleistung mindestens der Batterieleistung entsprechen sollte. Verfügbare PV-Leistung wird dazu genutzt, den Speicher wann immer es möglich ist zu laden und den Ladezustand möglichst hoch zu halten. Die Erfindung erlaubt die volle Ausnutzung der Energiespeicherkapazität mit einem nahezu immer vollgeladenen Speicher und einer vollen Verfügbarkeit der maximalen positiven sowie negativen Regelleistung. Durch die Einbindung des Photovoltaikgenerators in dem erfindungsgemäßen Verfahren kann eine symmetrische Regelleistung bereitgestellt werden, die mindestens doppelt so hoch ist wie mit einem entsprechenden Energiespeicher einzeln erzielbar wäre.

### KURZBESCHREIBUNG DER FIGUREN

Im Folgenden wird die Erfindung anhand in den Figuren dargestellter Ausführungsbeispiele weiter erläutert und beschrieben.
- Fig. 1: zeigt eine erfindungsgemäße Energieerzeugungsanlage mit einem PV-Generator, einem Energiespeicher und einer Steuerungseinheit;
- Fig. 2: zeigt einen ersten Zeitverlauf von elektrischen Leistungen des PV-Generators, des Energiespeichers, der Energieerzeugungsanlage und eines Ladezustandes des Energiespeichers;
- Fig. 3: zeigt einen zweiten Zeitverlauf von elektrischen Leistungen des PV-Generators, des Energiespeichers, der Energieerzeugungsanlage und eines Ladezustandes des Energiespeichers;
- Fig. 4: zeigt einen zweiten Zeitverlauf von elektrischen Leistungen des PV-Generators, des Energiespeichers, der Energieerzeugungsanlage und eines Ladezustandes des Energiespeichers.

### FIGURENBESCHREIBUNG

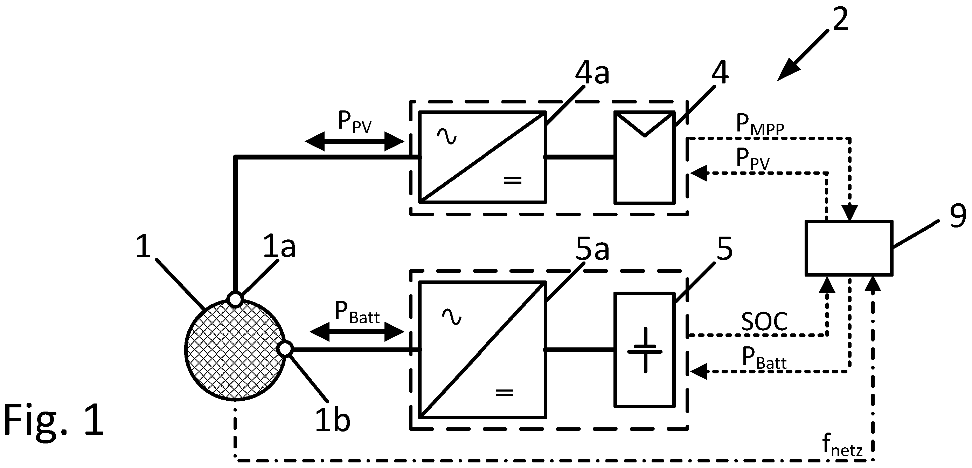

Fig. 1 zeigt eine Energieerzeugungsanlage 2 mit einem Photovoltaikgenerator 4 und einem Energiespeicher 5.

Der Photovoltaikgenerator 4 kann je nach aktueller Sonneneinstrahlung eine elektrische PV-Maximalleistung P_MPP erzeugen. Ein Wechselrichter 4a entnimmt dem Photovoltaikgenerator 4 eine aktuelle PV-Leistung P_PV, die insbesondere durch Einstellen der Spannung am Photovoltaikgenerator 4 zwischen Null und der PV-Maximalleistung P_MPP variiert werden kann. Die PV-Leistung P_PV kann auch negative Werte annehmen, indem elektrische Leistung in den Photovoltaikgenerator 4 zurückgespeist wird. Herkömmliche PV-Module sind in der Lage, eine Leistung in der Größenordnung ihrer PV-Nennleistung P_Peak problemlos aufzunehmen. Der Wechselrichter 4a wandelt die derart als Gleichstrom mit dem Photovoltaikgenerator 4 ausgetauschte PV-Leistung P_PV in einen Wechselstrom und tauscht die PV-Leistung P_PV über einen Netzanschlusspunkt 1a mit einem Wechselspannungsnetz 1 aus.

Der Energiespeicher 5 ist mit einem Umrichter 5a verbunden, der eine elektrische Batterieleistung P_Batt mit dem Energiespeicher 5 austauscht, in einen Wechselstrom wandelt und als Batterieleistung P_Batt über einen Netzanschlusspunkt 1b mit dem Wechselspannungsnetz 1 austauscht. Der Energiespeicher 5 weist üblicherweise eine spezifische Speicherkapazität und einen aktuellen Ladezustand SOC ("state of charge") auf, wobei der Ladezustand SOC regelmäßig in Prozent angibt, wieviel Energie relativ zur Speicherkapazität aktuell in dem Energiespeicher gespeichert ist. Ein SOC von Null bedeutet somit, dass der Energiespeicher 5 entladen ist, und ein SOC von 100% zeigt an, dass der Energiespeicher 5 vollständig geladen ist.

Die Energieerzeugungsanlage 2 tauscht eine elektrische Gesamtleistung P_Netz mit dem Wechselspannungsnetz 1 aus. Die Gesamtleistung P_Netz setzt sich aus der PV-Leistung P_PV und der Batterieleistung P_Batt zusammen und kann positive oder negative Werte annehmen.

Die Netzanschlusspunkte 1a und 1b können durch einen gemeinsamen Netzanschlusspunkt ersetzt werden, d.h. die Energieerzeugungsanlage 2 kann die Gesamtleistung auch über einen einzigen, gemeinsamen Netzanschlusspunkt mit dem Wechselspannungsnetz 1 austauschen. Ein gemeinsamer Netzanschluss für mehrere bidirektionale Wechselrichter 4a und/oder Umrichter 5a kann einen Transformator umfassen, der eine netzseitige Wicklung und mehrere Wicklungen für den Anschluss der Einrichtungen der Energieerzeugungsanlage 2 umfasst. Dadurch können mehrere Akteure, die sich am Austausch der elektrischen Leistung mit dem Netz beteiligen, direkt an den Transformator angeschlossen werden. Der Transformator muss auf eine Nennleistung ausgelegt sein, die lediglich die Nennleistung des Photovoltaikgenerators 4 und eine Überlastfähigkeit für (kurzfristigen) Abruf positiver Regelleistung aus dem Energiespeicher 5 umfasst.

Eine Steuerungseinheit 9 ist kommunikativ mit dem Photovoltaikgenerator 4 und dem Energiespeicher 5 bzw. mit dem Wechselrichter 4a und dem Umrichter 5a verbunden. Die Steuerungseinheit 9 empfängt über diese Verbindung einerseits Betriebsdaten des Photovoltaikgenerators 4 und des Energiespeichers 5. Andererseits sendet die Steuerungseinheit 9 Sollwerte für die PV-Leistung P_PV und die Batterieleistung P_Batt an den Photovoltaikgenerator 4 und den Energiespeicher 5 bzw. den Wechselrichter 4a und den Umrichter 5a (oder auch deren entsprechende Steuerungsvorrichtungen).

Die aus dem Photovoltaikgenerator 4 und dem Wechselrichter 4a gebildete Photovoltaikanlage kann eine Vielzahl von Untereinheiten umfassen, die hier nicht näher dargestellt sind. Insbesondere kann es sich um eine Photovoltaikanlage mit einer Vielzahl an Wechselrichtern 4a und einer entsprechenden Anzahl an Photovoltaikgeneratoren 4 handeln, die von einer gemeinsamen Anlagensteuerung gesteuert werden. Ebenso kann die aus dem Energiespeicher 5 und dem Umrichter 5a gebildete Speicheranlage eine Vielzahl von Untereinheiten umfassen, die hier nicht näher dargestellt sind. Insbesondere kann es sich um eine Speicheranlage mit einer Vielzahl an Umrichtern 5a und einer entsprechenden Anzahl an Energiespeichern 5 handeln, die von einer gemeinsamen Anlagensteuerung gesteuert werden. Die Energieerzeugungsanlage 2 kann insbesondere mehrere Energiespeicher 5 unterschiedlichen Typs umfassen, die über mehrere Umrichter 5a an einem gemeinsamen Netzanschlusspunkt 1b mit dem Wechselspannungsnetz 1 verbunden sind. Zu den möglichen Speichertypen zählen insbesondere elektrochemische Speicher, d.h. Blei-, Lithium-Ionen- oder Flowbatterien und sogenannte Superkondensatoren (SuperCaps), sowie andere zur Erbringung von Regelleistung geeignete Energiespeicher, wie z.B. Pumpspeicher.

Alternativ oder zusätzlich kann die Energieerzeugungsanlage 2 mehrere PV-Generatoren 4 und/oder Energiespeicher 5 unterschiedlichen Typs umfassen. Dabei können mehrere PV-Generatoren 4 und/oder Energiespeicher 5 über jeweils individuelle Gleichstromwandler mit einem gemeinsamen Wechselrichter verbunden sein und über diesen Wechselrichter elektrische Leistung bidirektional mit dem Wechselspannungsnetz 1 austauschen.

In der Energieerzeugungsanlage 2 kommuniziert die Steuerungseinheit 9 mit den jeweiligen Anlagensteuerungen der Photovoltaikanlage und der Speicheranlage und tauscht mit diesen die entsprechenden Betriebsdaten P_MPP, SOC sowie die Sollwerte P_PV, P_Batt aus. Energiespeicher 5 unterschiedlichen Typs innerhalb der Energieerzeugungsanlage 1 werden dabei mit unterschiedlichen Vorgaben betrieben, indem z.B. ein erster Energiespeicher 5 mit einer Lithium-Ionen-Batterie, die eine hohe Energiedichte aufweist, anders betrieben wird als ein zweiter Energiespeicher 5 mit einem Superkondensator, der eine vergleichsweise geringe Energiedichte, jedoch eine erheblich größere Leistungsdichte aufweist.

Grundsätzlich kann auch auf die Steuerungseinheit 9 auch als Teil der Photovoltaikanlage oder der Speicheranlage realisiert sein, indem die jeweiligen Betriebsdaten direkt zwischen der Photovoltaikanlage und der Speicheranlage ausgetauscht werden. Insbesondere kann die Steuerungseinheit 9 mit einer Steuerung des Wechselrichter 4a zusammenfallen und die Betriebsdaten von der Speicheranlage direkt empfangen. Dies kann vorteilhaft sein, da der Wechselrichter 4a bauartbedingt bereits eine schnelle Messung von Frequenz, Strom und Leistung umfasst und daher eine schnellere Reaktion als über den "Umweg" über eine anderswo angeordnete Steuerungseinheit 9 ermöglicht.

In einer speziellen Ausführungsform des Verfahrens können aktuelle Betriebsdaten des Photovoltaikgenerators, insbesondere die PV-Maximalleistung sowie die aktuelle und ggf. eine geplante PV-Leistung, und des Energiespeichers, insbesondere der Ladezustand sowie die aktuelle und ggf. eine geplante Batterieleistung zwischen dem Photovoltaikgenerator und dem Energiespeicher direkt ausgetauscht werden. Die entsprechenden Steuerungen des Photovoltaikgenerators und des Energiespeichers sind dann dazu eingerichtet, einerseits autark zu handeln und andererseits das Verhalten des jeweils anderen Beteiligten zur Bereitstellung der Regelleistung zu berücksichtigen.

Zusätzlich kann die Steuerungseinheit 9 Informationen über einen aktuellen Betriebszustand des Wechselspannungsnetzes 1 erhalten. Insbesondere kann die Steuerungseinheit die Netzfrequenz f_netz des Wechselspannungsnetzes 1 erfassen oder empfangen, ggf. auch von dem Wechselrichter 4a. Die Netzfrequenz f_netz ist u.a. ein Indikator für das Leistungsgleichgewicht im Wechselspannungsnetz 1 und kann von der Steuerungseinheit 9 verwendet werden, um einen Bedarf an Regelleistung zu ermitteln, die von der Energieerzeugungsanlage 2 bereitgestellt werden soll, insbesondere indem die zwischen Energieerzeugungsanlage 2 und Wechselspannungsnetz 1 ausgetauschte Gesamtleistung P_Netz in Reaktion auf Abweichungen der Netzfrequenz f_netz von einer Nennfrequenz des Wechselspannungsnetz 1 variiert wird.

Alternativ oder zusätzlich kann die Steuerungseinheit 9 mit einer übergeordneten Steuerung verbunden sein und von dieser Steuerung angewiesen werden, die ausgetauschte Gesamtleistung P_Netz in einem vorgegebenen Maße zu variieren und derart angewiesene Regelleistung zur Verfügung zu stellen. Darüber hinaus kann vorgesehen sein, dass die Steuerungseinheit 9 einer übergeordneten Steuerung mitteilt, wieviel Regelleistung in einem vorgegebenen zukünftigen Zeitraum durch die Energieerzeugungsanlage 2 zur Verfügung gestellt werden kann.

Die Netzanschlusspunkte 1a und 1b können räumlich entfernt zueinander angeordnet sein, insbesondere in demselben oder in unterschiedlichen Ortsnetzen oder auf derselben oder unterschiedlichen Netzebenen. Die Kommunikation zwischen der Steuerungseinheit 9 und den Einrichtungen der Energieerzeugungsanlage 2 sowie zwischen der Steuerungseinheit 9 und einer übergeordneten Steuerung kann jeweils über direkte Kabelverbindung oder indirekt über ein Netzwerk erfolgen.

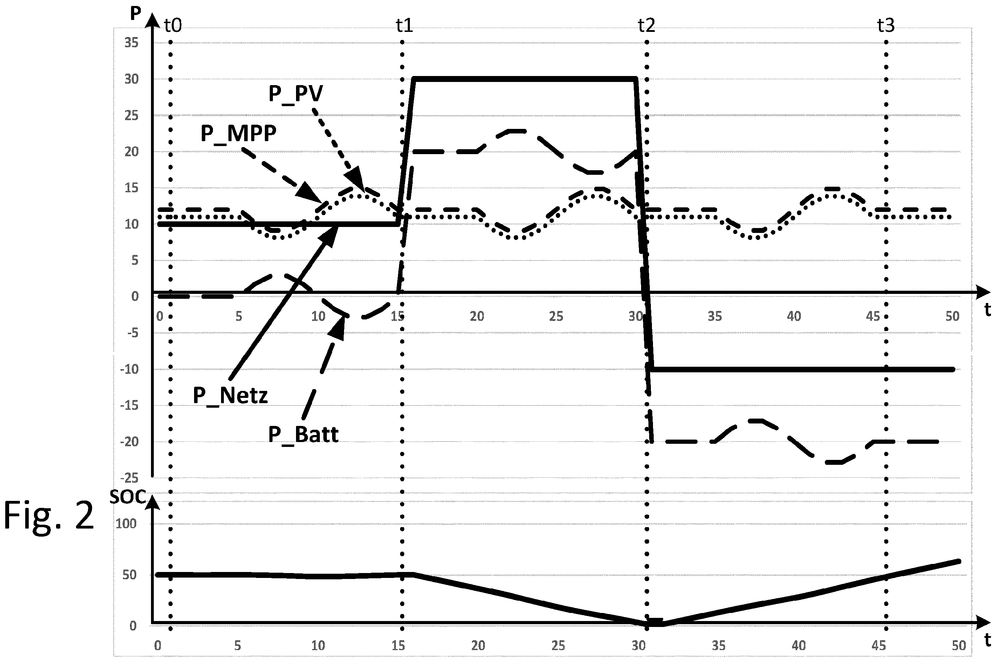

**Fig. 2** zeigt im oberen Teil einen beispielhaften Zeitverlauf von elektrischen Leistungen P des Photovoltaikgenerators 4 (PV-Maximalleistung P_MPP und PV-Leistung P_PV), des Energiespeichers 5 (Batterieleistung P_Batt) und der Energieerzeugungsanlage 2 (Gesamtleistung P_Netz) sowie im unteren Teil einen korrespondierenden Zeitverlauf eines Ladezustandes SOC des Energiespeichers 5. Die Einheiten an den Achsen sind beispielhaft zu verstehen und entsprechend einer konkreten Ausführungsform der Energieerzeugungsanlage 2 zu skalieren. Die Zeit t kann beispielsweise in Minuten angegeben sein und die Leistungen P in Kilowatt oder Megawatt.

Am Zeitpunkt t0 wird der Photovoltaikgenerator 4 derart betrieben, dass die PV-Leistung P_PV im Wesentlichen der PV-Maximalleistung P_MPP entspricht, d.h. der Photovoltaikgenerator 4 erzeugt die maximal mögliche Leistung P_MPP, die abzüglich etwaiger Verluste als PV-Leistung P_PV über den Wechselrichter 4a eingespeist wird. Die Batterieleistung P_Batt ist am Zeitpunkt t0 gleich Null, so dass die Gesamtleistung P_Netz der Energieerzeugungsanlage 2 der PV-Leistung P_PV entspricht (abzüglich etwaiger Verluste).

Eine Variation der PV-Maximalleistung P_MPP, beispielsweise aufgrund einer Änderung der Einstrahlung auf den Photovoltaikgenerator 4, kann als Variation der Gesamtleistung P_Netz in das Wechselspannungsnetz 1 durchgereicht werden. Alternativ kann die Gesamtleistung P_Netz der Energieerzeugungsanlage 2 konstant bei einer Grundgesamtleistung P_Netz_0 gehalten werden, indem die PV-Leistung P_PV der Variation der PV-Maximalleistung P_MPP folgt und die Differenz zwischen der PV-Leistung P_PV und der konstanten Grundgesamtleistung P_Netz_0 durch einen geeigneten Austausch von Batterieleistung P_Batt mit dem Energiespeicher 5 ausgeglichen wird.

Im Beispiel gemäß Fig. 1 wird die Variation der PV-Maximalleistung P_MPP und damit auch der PV-Leistung P_PV im Zeitraum t0 bis t1 durch eine gegenläufige Batterieleistung P_Batt derart kompensiert, dass die Gesamtleistung P_Netz konstant bei der Grundgesamtleistung P_Netz_0 gehalten wird. Dadurch ändert sich der Ladezustand SOC des Energiespeichers 5 nur geringfügig. Eine konstante, zugesicherte Gesamtleistung P_Netz für einen vorgegebenen Zeitraum ist insbesondere vorteilhaft für die Planbarkeit der Steuerung des Betriebs des Wechselspannungsnetzes 1 durch den Netzbetreiber.

Im Zeitraum t1 bis t2 wird eine positive Regelleistung von der Energieerzeugungsanlage 2 angefordert und durch eine Erhöhung der Gesamtleistung P_Netz bereitgestellt. Die Anforderung entsteht beispielsweise aufgrund einer Verringerung der Netzfrequenz, die auf ein Leistungsdefizit im Wechselspannungsnetz 1 hindeutet, oder aufgrund einer expliziten Anforderung durch eine übergeordnete Steuerung. Da die PV-Leistung P_PV bereits der PV-Maximalleistung P_MPP entspricht und insofern nicht gesteigert werden kann, wird die Erhöhung der Gesamtleistung P_Netz um die positive Regelleistung durch eine Erhöhung der Batterieleistung P_Batt erbracht. Der Ladezustand SOC des Energiespeichers 5 sinkt entsprechend. Auch im Zeitraum t1 bis t2 können Variationen der PV-Maximalleistung P_MPP durch gegenläufige Änderungen der Batterieleistung P_Batt ausgeglichen werden, um eine konstante Gesamtleistung P_Netz einzuspeisen. Im Beispiel gemäß Fig. 1 entspricht die Gesamtleistung P_Netz im Zeitraum t1 bis t2 der Summe aus der Grundgesamtleistung P_Netz_0 und der angeforderten positiven Regelleistung.

Am Zeitpunkt t2 ist der Ladezustand SOC des Energiespeicher 5 nahe null, d.h. es kann keine positive Regelleistung über den Zeitpunkt t2 hinaus bereitgestellt werden. Zudem hätte die im Zeitraum t1 bis t2 angeforderte positive Regelleistung nicht höher sein dürfen, sonst wäre der Energiespeicher 5 bereits vor dem Zeitpunkt t2 leer gewesen und die Regelleistung wäre vorzeitig entfallen. Mit anderen Worten, im Zeitraum t1 bis t2 wurde der Energieerzeugungsanlage 2 die für diesen Zeitraum maximal mögliche positive Regelleistung abgefordert.

Im Zeitraum t2 bis t3 wird eine negative Regelleistung von der Energieerzeugungsanlage 2 angefordert und durch eine Reduzierung der Gesamtleistung P_Netz bereitgestellt. Die Anforderung entsteht beispielsweise aufgrund einer Erhöhung der Netzfrequenz, die auf einen Leistungsüberschuss im Wechselspannungsnetz 1 hindeutet, oder aufgrund einer expliziten Anforderung einer übergeordneten Steuerung. Die PV-Leistung P_PV entspricht weiterhin der PV-Maximalleistung P_MPP, und die Reduzierung der Gesamtleistung P_Netz um die negative Regelleistung wird durch eine Verringerung der Batterieleistung P_Batt erbracht. Die Gesamtleistung P_Netz wird durch die Einspeisung der Batterieleistung P_Batt in den Energiespeicher 5 gegenüber der PV-Leistung P_PV reduziert. Der Ladezustand SOC des Energiespeichers 5 steigt entsprechend. Auch im Zeitraum t2 bis t3 können Variationen der PV-Maximalleistung P_MPP durch gegenläufige Änderungen der Batterieleistung P_Batt ausgeglichen werden, um eine konstante Gesamtleistung P_Netz einzuspeisen. Im Beispiel gemäß Fig. 1 entspricht die Gesamtleistung P_Netz im Zeitraum t2 bis t3 der Summe aus der Grundgesamtleistung P_Netz_0 und der angeforderten negativen Regelleistung.

Am Zeitpunkt t3 ist der Ladezustand SOC des Energiespeichers 5 zu dem Startwert zum Zeitpunkt t0 bzw. t1 zurückgekehrt. Grundsätzlich kann über den Zeitpunkt t3 hinaus negative Regelleistung bereitgestellt werden, insbesondere bis der Ladezustand SOC des Energiespeichers 5 den Wert 100% erreicht und der Energiespeicher 5 keine Leistung mehr aufnehmen kann.

Das Verhalten gemäß Fig. 1 kann darauf optimiert werden, eine symmetrische Regelleistung in einem zukünftigen Zeitraum anzubieten und bei entsprechender Anforderung entsprechend bereitzustellen. Dies bedeutet beispielsweise, dass vor dem Zeitpunkt t1 entschieden wird, für den Zeitraum t1 bis t2 eine Regelleistung in einer bestimmten Höhe anzubieten. Da nicht vorhersagbar ist, ob diese Regelleistung im Zeitraum t1 bis t2 als positive oder als negative Regelleistung angefordert wird, muss der Ladezustand SOC des Energiespeicher 5 zum Zeitpunkt t1 bei etwa 50% liegen, um eine maximale symmetrische Regelleistung, d.h. positiv oder negativ mit dem gleichen Betrag, für den gesamten Zeitraum t1 bis t2 liefern zu können. Bei einem Ladezustand SOC größer als 50% steht weniger Energie für negative als für positive Regelleistung zur Verfügung und umgekehrt, so dass die maximal anbietbare Regelleistung reduziert ist, wenn der Ladezustand SOC zum Zeitpunkt t1 von 50% abweicht.

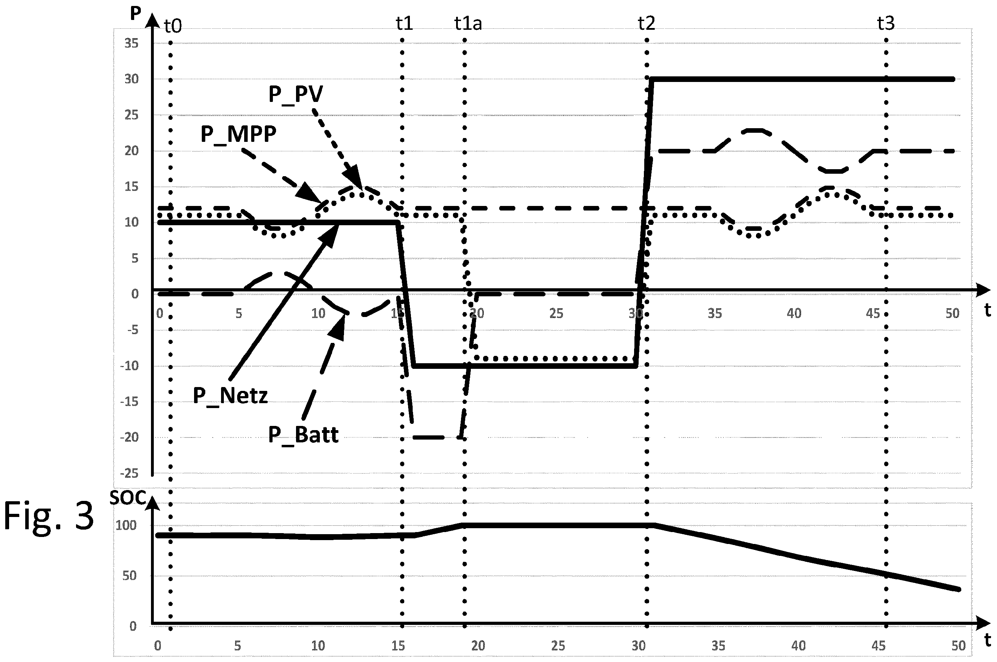

**Fig. 3** zeigt im oberen Teil einen weiteren beispielhaften Zeitverlauf der elektrischen Leistungen P_MPP, P_PV, P_Batt und P_Netz sowie im unteren Teil einen korrespondierenden Zeitverlauf des Ladezustandes SOC.

Am Zeitpunkt t0 entspricht die PV-Leistung P_PV im Wesentlichen der PV-Maximalleistung P_MPP und wird über den Wechselrichter 4a eingespeist. Die Gesamtleistung P_Netz der Energieerzeugungsanlage 2 entspricht der PV-Leistung P_PV, da die Batterieleistung P_Batt am Zeitpunkt t0 gleich Null ist. Eine Variation der PV-Maximalleistung P_MPP kann durch gegenläufige Änderungen der Batterieleistung P_Batt ausgeglichen werden, um die Gesamtleistung P_PV im Zeitraum t0 bis t1 bei einer konstanten Grundgesamtleistung P_Netz_0 zu halten. Der Ladezustand SOC des Energiespeichers 5 variiert entsprechend geringfügig. Alternativ (hier nicht dargestellt) kann eine Variation der PV-Maximalleistung P_MPP als Variation der Gesamtleistung P_Netz in das Wechselspannungsnetz 1 durchgereicht werden.

Im Zeitraum t1 bis t2 wird eine negative Regelleistung von der Energieerzeugungsanlage 2 angefordert und durch eine Reduzierung der Gesamtleistung P_Netz bereitgestellt. Dazu wird zunächst im Zeitraum t1 bis t1a eine Leistung P_Batt in den Energiespeicher 5 eingespeist, bis dieser vollgeladen ist und einen Ladezustand SOC von 100% aufweist. Im Zeitraum t1a bis t2 kann der Energiespeicher 5 dann keine Batterieleistung P_Batt mehr aufnehmen. Die Gesamtleistung P_Netz wird nun um die angeforderte negative Regelleistung reduziert, indem die PV-Leistung P_PV gegenüber der PV-Maximalleistung P_MPP reduziert wird. Da die Summe aus Grundgesamtleistung P_Netz_0 und negativer Regelleistung im Zeitraum t1 a bis t2 negativ ist, wird die PV-Leistung P_PV ebenfalls negativ, indem elektrische Leistung in den Photovoltaikgenerator 4 zurückgespeist wird. Etwaige Variationen der PV-Maximalleistung P_MPP haben im Zeitraum t1a bis t2 keine Auswirkungen. Der Ladezustand SOC des Energiespeichers 5 verbleibt bei 100%.

Im Zeitraum t2 bis t3 wird eine positive Regelleistung von der Energieerzeugungsanlage 2 angefordert und durch eine Erhöhung der Gesamtleistung P_Netz bereitgestellt. Die PV-Leistung P_PV wird auf die PV-Maximalleistung P_MPP eingestellt. Die Erhöhung der Gesamtleistung P_Netz um die positive Regelleistung gegenüber der Grundgesamtleistung P_Netz_0 zum Zeitpunkt t1 wird durch eine Erhöhung der Batterieleistung P_Batt realisiert, d.h. dem Energiespeicher 5 wird Leistung entnommen. Der Ladezustand SOC des Energiespeichers 5 sinkt entsprechend. Variationen der PV-Maximalleistung P_MPP und damit der PV-Leistung P_PV können durch entsprechende gegenläufige Änderungen der Batterieleistung P_Batt ausgeglichen werden, um die Gesamtleistung P_Netz konstant zu halten.

Zum Zeitpunkt t3 liegt der Ladezustand des Energiespeichers 5 bei etwa 50%, d.h. es kann weitere positive Regelleistung über den Zeitpunkt t3 hinaus bereitgestellt werden. Alternativ hätte im Zeitraum t2 bis t3 eine doppelt so hohe positive Regelleistung bereitgestellt werden können als tatsächlich bereitgestellt wurde.

In einer Ausführungsform gemäß Fig. 3 steht somit nahezu die gesamte Speicherkapazität des Energiespeichers 5 für die Erbringung positiver Regelleistung zur Verfügung, da die Erbringung negativer Regelleistung im Zweifel komplett durch eine Änderung der PV-Leistung P_PV realisiert wird. Daher kann der Ladezustand SOC des Energiespeichers 5 zum Zeitpunkt t1 vorteilhaft bei nahezu 100% liegen, um einen maximalen positiven Teil einer symmetrischen Regelleistung für den Zeitraum t1 bis t2 zu gewährleisten, wobei ggf. eine Reservekapazität des Energiespeichers 5 zum Ausgleich von Schwankungen der PV-Maximalleistung P_MPP vorgehalten werden kann. Der maximale negative Teil der symmetrischen Regelleistung ist lediglich durch die PV-Nennleistung P_Peak des Photovoltaikgenerator 4 begrenzt. Eine Rückspeisung in den Photovoltaikgenerator 4 in Höhe der PV-Nennleistung P_Peak ist jederzeit möglich, insbesondere auch nachts.

Im Vergleich zur Ausführungsform gemäß Fig. 1, in der der Energiespeicher 5 die geforderte Regelleistung sowohl positiv als auch negativ alleine realisieren können muss, kann in der Ausführungsform gemäß Fig. 3 mit demselben Energiespeicher 5 eine größere symmetrische Regelleistung angeboten werden, die bis zu doppelt so groß sein kann, wenn die PV-Nennleistung P_Peak mindestens der für einen zukünftigen Zeitraum maximal anbietbaren positiven Regelleistung entspricht, die sich wiederum aus dem Quotienten aus der Speicherkapazität des Energiespeichers 5 und der Dauer des zukünftigen Zeitraums ergibt.

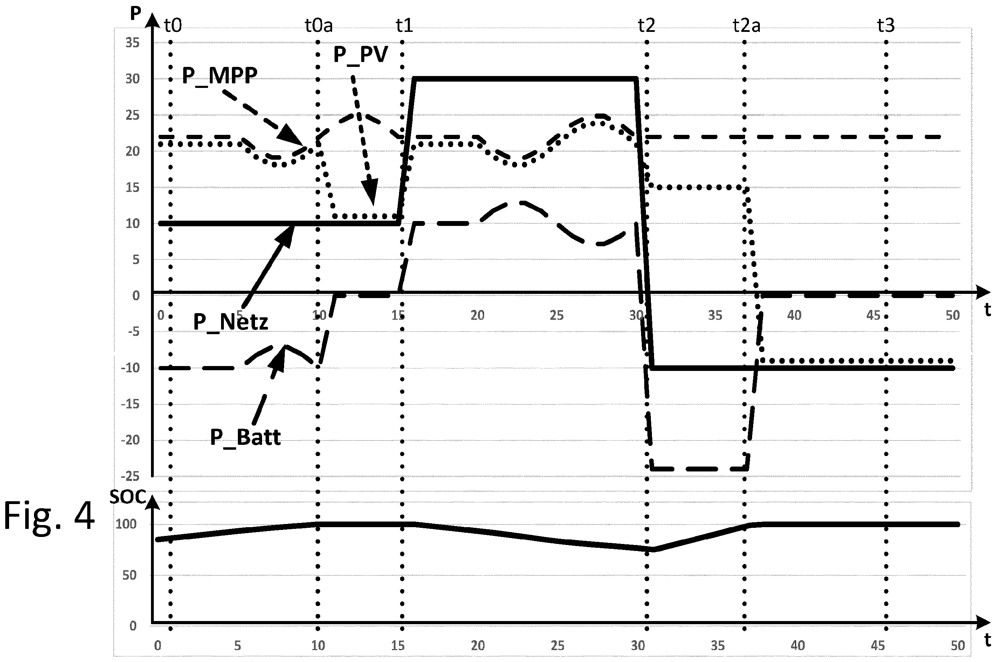

**Fig. 4** zeigt im oberen Teil einen weiteren beispielhaften Zeitverlauf der elektrischen Leistungen P_MPP, P_PV, P_Batt und P_Netz sowie im unteren Teil einen korrespondierenden Zeitverlauf des Ladezustandes SOC.

Am Zeitpunkt t0 entspricht die PV-Leistung P_PV im Wesentlichen der PV-Maximalleistung P_MPP und wird über den Wechselrichter 4a eingespeist. Der Ladezustand SOC des Energiespeichers 5 liegt unterhalb von 100%, so dass der Energiespeicher 5 mit der Batterieleistung P_Batt geladen wird. Die Gesamtleistung P_Netz der Energieerzeugungsanlage 2 entspricht der PV-Leistung P_PV abzüglich der Batterieleistung P_Batt. Eine Variation der PV-Maximalleistung P_MPP kann durch gegenläufige Änderungen der Batterieleistung P_Batt ausgeglichen werden, um die Gesamtleistung P_PV im Zeitraum t0 bis t0a bei einer konstanten Grundgesamtleistung P_Netz_0 zu halten.

Am Zeitpunkt t0a ist der Energiespeicher 5 vollgeladen und kann keine Batterieleistung P_Batt mehr aufnehmen. Die Gesamtleistung P_Netz wird jedoch konstant gehalten, indem die PV-Leistung P_PV gegenüber der PV-Maximalleistung P_MPP auf eine PV-Grundleistung P_PV_0 reduziert wird, die der Gesamtgrundleistung P_Netz_0 der Energieerzeugungsanlage 2 entspricht. Etwaige Variationen der PV-Maximalleistung P_MPP haben im Zeitraum t0a bis t1 keine Auswirkungen. Der Ladezustand SOC des Energiespeichers 5 verbleibt bei 100%.

Im Zeitraum t1 bis t2 wird eine positive Regelleistung von der Energieerzeugungsanlage 2 angefordert und durch eine Erhöhung der Gesamtleistung P_Netz bereitgestellt. Die PV-Leistung P_PV wird auf die PV-Maximalleistung P_MPP eingestellt. Sofern die derart gegenüber der Gesamtgrundleistung P_Netz_0 erhöhte PV-Leistung P_PV nicht ausreicht, um die angeforderte positive Regelleistung zu erbringen, wird die Batterieleistung P_Batt derart erhöht, dass dem Energiespeicher 5 die Differenz zwischen der einzustellenden Gesamtleistung P_Netz (inkl. positiver Regelleistung) und der PV-Maximalleistung P_MPP entnommen wird. Der Ladezustand SOC des Energiespeichers 5 sinkt entsprechend. Variationen der PV-Maximalleistung P_MPP und damit der PV-Leistung P_PV können durch entsprechende gegenläufige Änderungen der Batterieleistung P_Batt ausgeglichen werden, um die Gesamtleistung P_Netz konstant zu halten.

Am Zeitpunkt t2 ist der Ladezustand SOC des Energiespeichers 5 um etwa 25% gesunken; dies ist deutlich weniger als in den gleichlangen Zeiträumen t1 bis t2 in Fig. 2 bzw. t2 bis t3 in Fig. 3, obwohl dieselbe positive Regelleistung durch die Energieerzeugungsanlage 2 bereitgestellt wurde. Durch die Bereitstellung eines Anteils an der geforderten positiven Regelleistung durch den Photovoltaikgenerator 4 wird der Energiespeicher 5 gleichsam entlastet und die Energieerzeugungsanlage 2 kann über einen längeren Zeitraum positive Regelleistung liefern, oder es kann durch die Energieerzeugungsanlage 2 ohne Veränderung am Energiespeicher 5 eine insgesamt höhere positive Regelleistung über einen vorgegebenen zukünftigen Zeitraum realisiert werden.

Im Zeitraum t2 bis t3 wird eine negative Regelleistung von der Energieerzeugungsanlage 2 angefordert und durch eine Reduzierung der Gesamtleistung P_Netz bereitgestellt. Dazu wird zunächst im Zeitraum t2 bis t2a eine Batterieleistung P_Batt in den Energiespeicher 5 eingespeist. Sofern die dadurch erzielbare Reduzierung der Gesamtleistung P_Netz nicht ausreicht, um die angeforderte negative Regelleistung zu erbringen, beispielsweise weil die maximal in den Energiespeicher 5 einspeisbare Leistung begrenzt ist, wird die PV-Leistung P_PV gegenüber der PV-Maximalleistung P_MPP reduziert. Durch die Einspeisung der Batterieleistung P_Batt in den Energiespeicher 5 steigt der Ladezustand SOC des Energiespeichers 5.

Am Zeitpunkt t2a beträgt der Ladezustand SOC 100%, d.h. der Energiespeicher 5 ist vollgeladen und kann keine Batterieleistung P_Batt mehr aufnehmen. Die Gesamtleistung P_Netz wird dadurch konstant gehalten, dass die PV-Leistung P_PV weiter reduziert und ggf. negativ wird, indem elektrische Leistung in den Photovoltaikgenerator 4 zurückgespeist wird. Die Gesamtleistung P_Netz im Zeitraum t2a bis t3 bleibt dadurch konstant bei einem Wert, der der Summe aus der Grundgesamtleistung zum Zeitpunkt t0 bzw. t1 und der angeforderten negativen Regelleistung entspricht. Der Ladezustand SOC des Energiespeichers 5 verbleibt bei 100%.

Die Definition der PV-Grundleistung P_PV_0 gemäß Fig. 4 kann auch auf die Ausführungsformen gemäß Fig. 2 und 3 übertragen werden, indem die PV-Grundleistung P_PV_0 dort gerade der PV-Maximalleistung P_MPP entspricht, die wiederum zumindest mittelbar als Grundlage zur Bestimmung der Gesamtgrundleistung P_Netz_0 der Energieerzeugungsanlage 2 dient. In der Ausführungsform gemäß Fig. 4 ist die PV-Grundleistung P_PV_0 gegenüber der PV-Maximalleistung reduziert. Dadurch kann die PV-Leistung bei Bedarf erhöht werden und so zur Erbringung positiver Regelleistung durch die Energieerzeugungsanlage 2 beitragen.

In einer Ausführungsform gemäß Fig. 4 kann die PV-Grundleistung P_PV_0 derart zwischen Null und der PV-Maximalleistung P_MPP gewählt werden, dass die PV-Leistung P_PV erhöht werden kann, um einen Beitrag zur positiven Regelleistung zu liefern. Als besonders vorteilhaft erweist es sich, die PV-Grundleistung bei etwa 40% bis 60% der PV-Maximalleistung zu wählen, so dass etwa eine Hälfte der PV-Maximalleistung als positive Regelleistung und die andere Hälfte als negative Regelleistung zur Verfügung steht. Diese Anteile addieren sich zu der schon in der Ausführungsform gemäß Fig. 2 mindestens verfügbaren negativen Regelleistung durch Rückspeisung in den Photovoltaikgenerator 4 und der verfügbaren positiven Regelleistung durch Entnahme von Batterieleistung P_Batt aus dem Energiespeicher 5.

In einer Ausführungsform gemäß Fig. 4 kann somit für einen vorgegebenen zukünftigen Zeitraum eine positive Regelleistung gewährleistet werden, die sich aus der Speicherkapazität des Energiespeicher 5 zu Beginn des Zeitraums geteilt durch die Dauer des zukünftigen Zeitraums zuzüglich der Differenz zwischen PV-Grundleistung P _PV _0 und der PV-Maximalleistung P_MPP errechnet. Die gewährleistete negative Regelleistung für den zukünftigen Zeitraum entspricht der PV-Nennleistung P_Peak zuzüglich der PV-Grundleistung P_PV_0. Gegenüber der Ausführungsform gemäß Fig. 3 kann also eine nochmals größere symmetrische Regelleistung angeboten werden.

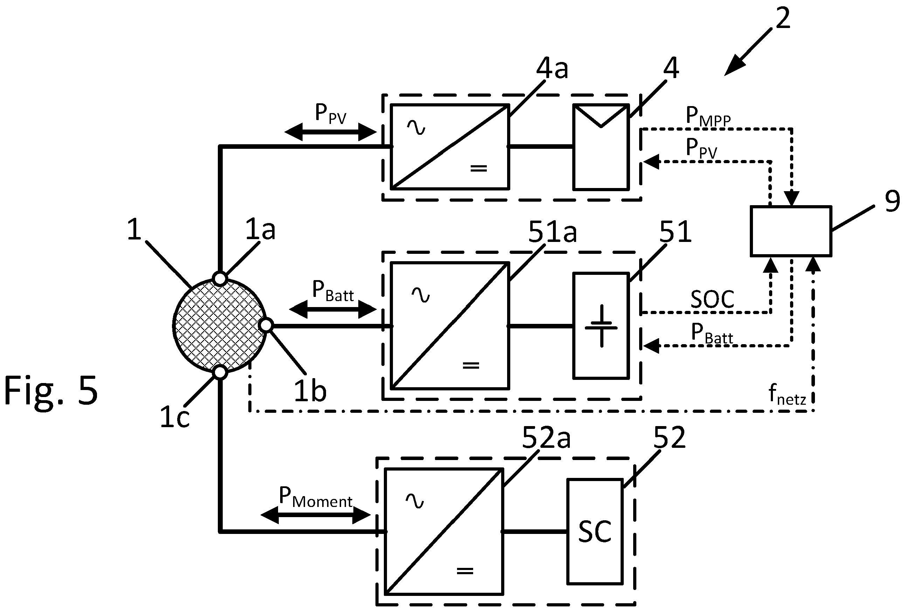

Fig. 5 zeigt eine Ausführungsform einer Energieerzeugungsanlage 2 mit einem Photovoltaikgenerator 4 und mehreren Energiespeichern 51, 52 unterschiedlichen Typs. Der Energiespeicher 51 kann dazu eingerichtet sein, sich in Kooperation mit dem Photovoltaikgenerator 4 nach einem der anhand der Figuren 2-4 beschriebenen Verfahren zu verhalten, so dass die Energieerzeugungsanlage 2 Regelleistung für die Primär- und/oder Sekundärregelung des Wechselspannungsnetzes 1 bereitstellt.

Der zusätzliche Energiespeicher 52 kann als Speicher mit besonders hoher Leistungsdichte ausgeführt sein, insbesondere als sogenannter Superkondensator (engl. SuperCap, kurz: SC). Dieser Energiespeicher 52 kann dann weitgehend unabhängig vom Energiespeicher 51 betrieben werden und über den Netzanschlusspunkt 1c eine elektrische Leistung P_Moment mit dem Wechselspannungsnetz 1 austauschen. Der Netzanschlusspunkt 1c kann getrennt von den Netzanschlusspunkten 1a, 1b ausgeführt sein oder mit diesen in einer gemeinsamen Einrichtung realisiert sein, beispielsweise als individuelle anlagenseitige Wicklung eines Transformators mit gemeinsamer netzseitiger Wicklung. Der Transformator muss dabei auf eine Nennleistung ausgelegt sein, die lediglich die Nennleistung des Photovoltaikgenerators 4 und eine Überlastfähigkeit für den kurzfristigen Abruf der Momentanregelleistung P_Moment aus dem Energiespeicher 52 umfasst. Es versteht sich, dass ein gezielter direkter oder indirekter Austausch elektrischer Leistung zwischen dem Energiespeicher 52 und dem Photovoltaikgenerator 4 bzw. dem Energiespeicher eingestellt werden kann. Insbesondere um den Ladezustand des Energiespeichers 52 bedarfsweise auf einen Sollwert einzustellen bzw. wiederherzustellen.

Die elektrische Leistung P_Moment kann dabei mittels eines geeigneten Umrichters 52a in Abhängigkeit von der Netzfrequenz so eingestellt werden, dass die Momentanregelung des Wechselspannungsnetzes 1 unterstützt wird. Insbesondere kann die elektrische Leistung P_Moment in direkter Abhängigkeit von der Änderungsrate der Netzfrequenz eingestellt werden, um schnellen Änderungen der Netzfrequenz entgegenzuwirken und so das Wechselspannungsnetz 1 zu stabilisieren. Dazu erweist es sich als besonders vorteilhaft, den Umrichter 52a mit einer spannungseinprägenden Regelung zu betreiben, die beispielsweise das Verhalten einer Synchronmaschine emuliert (sogenannte Virtuelle Synchronmaschine, kurz: VSM).

### BEZUGSZEICHENLISTE

- 1: Wechselspannungsnetz
- 1a, 1b: Netzanschlusspunkte
- 2: Energieerzeugungsanlage
- 4: Photovoltaikgenerator
- 4a: Wechselrichter
- 5: Energiespeicher
- 5a: Umrichter
- 9: Steuerungseinheit

- P_MPP: PV-Maximalleistung
- P_PV: PV-Leistung
- P_Batt: Batterieleistung
- P_Moment: Momentanreserveleistung
- P_Netz: Gesamtleistung

- f_netz: Netzfrequenz
- SOC: Ladezustand (State-of-Charge)

- t0, t1,: Zeitpunkte

## Patentansprüche

1. Verfahren zur Bereitstellung von Regelleistung für ein Wechselspannungsnetz (1) für einen vorgegebenen zukünftigen Zeitraum mit einem Regelleistungsbereich mittels einer Energieerzeugungsanlage (2), wobei die Energieerzeugungsanlage (2) einen Photovoltaikgenerator (4) und einen Energiespeicher (5) umfasst,
wobei die Energieerzeugungsanlage (2) eine elektrische Gesamtleistung (P_Netz) mit dem Wechselspannungsnetz (1) austauscht,
wobei die ausgetauschte Gesamtleistung (P_Netz) in Abhängigkeit von einer aktuellen PV-Maximalleistung (P_MPP), einer vorgebbaren PV-Grundleistung (P_PV_0) zwischen Null und der PV-Maximalleistung (P_MPP) und einer bereitgestellten bzw. angeforderten Regelleistung eingestellt wird,
wobei der Regelleistungsbereich eine maximale positive Regelleistung und eine maximale negative Regelleistung aufweist, die als Abweichungen von der Grundgesamtleistung (P_Netz_0) in dem vorgegebenen zukünftigen Zeitraum durch die Energieerzeugungsanlage (2) eingestellt werden können und auf Anforderung eingestellt werden,
wobei das Verfahren folgende Schritte umfasst:
- Ermittlung eines optimalen Regelleistungsbereichs für den vorgegebenen zukünftigen Zeitraum unter Berücksichtigung der aktuellen PV-Maximalleistung (P_MPP) und eines aktuellen Ladezustandes (SOC) des Energiespeichers (5),
- wenn keine Regelleistung angefordert ist: Einspeisen einer Grundgesamtleistung (P_Netz_0), die die PV-Grundleistung (P_PV_0) umfasst;
- wenn negative Regelleistung angefordert ist: Reduzieren der PV-Leistung (P_PV) gegenüber der PV-Grundleistung (P_PV_0);
- wenn positive Regelleistung angefordert ist: Entnahme einer Batterieleistung (P_Batt) aus dem Energiespeicher (5), wenn die angeforderte positive Regelleistung größer als die Differenz zwischen PV-Maximalleistung (P_MPP) und PV-Grundleistung (P_PV_0) ist.

2. Verfahren nach Anspruch 1, wobei das Reduzieren der PV-Leistung (P_PV) zur Bereitstellung negativer Regelleistung eine Rückspeisung in den Photovoltaikgenerator (4) umfasst.

3. Verfahren nach Anspruch 1 oder 2, wobei die Grundgesamtleistung (P_Netz_0) eine Batterieleistung (P_Batt) zum Laden des Energiespeichers (5) beinhaltet, wenn der Energiespeicher (5) geladen werden kann, und/oder wobei zunächst die Batterieleistung (P_Batt) zum Laden des Energiespeichers (5) erhöht wird, wenn negative Regelleistung angefordert ist und der Energiespeicher (5) geladen werden kann.

4. Verfahren nach einem der Ansprüche 1 bis 3, wobei die PV-Grundleistung (P_PV_0) der PV-Maximalleistung (P_MPP) entspricht oder dazu proportional ist, so dass etwaige Variationen der PV-Maximalleistung (P_MPP) zu entsprechenden Variationen der Grundgesamtleistung (P_Netz_0) führen.

5. Verfahren nach einem der Ansprüche 1 bis 3, wobei die PV-Grundleistung (P_PV_0) kleiner als die PV-Maximalleistung (P_MPP) ist und insbesondere zwischen 40% und 60% der PV-Maximalleistung (P_MPP) beträgt, wobei die PV-Leistung (P_PV) gegenüber der PV-Grundleistung (P_PV_0) erhöht wird, wenn positive Regelleistung angefordert ist, und ergänzende Entnahme einer Batterieleistung (P_Batt) aus dem Energiespeicher (5), wenn die angeforderte positive Regelleistung größer als die Differenz zwischen PV-Grundleistung (P_PV_0) und PV-Maximalleistung (P_MPP) ist, so dass die Gesamtleistung (P_Netz) die angeforderte positive Regelleistung umfasst.

6. Verfahren nach einem der vorangehenden Ansprüche, wobei die angeforderte Regelleistung als Funktion einer Abweichung einer Momentanfrequenz (f_netz) von einer Nennfrequenz (f_Nenn) des Wechselspannungsnetzes (1) und/oder einer Änderungsrate der Momentanfrequenz (f_netz) mittels einer Kennlinie bestimmt wird, wobei positive Regelleistung angefordert wird, wenn die Momentanfrequenz (f_netz) kleiner als die Nennfrequenz (f_Nenn) und/oder die Änderungsrate negativ ist, und wobei negative Regelleistung angefordert wird, wenn die Momentanfrequenz (f_netz) größer als die Nennfrequenz (f_Nenn) und/oder die Änderungsrate positiv ist.

7. Verfahren nach einem der Ansprüche 1 bis 5, wobei die angeforderte Regelleistung von einer übergeordneten Steuerung an die Energieerzeugungsanlage (2) vorgegeben wird.

8. Verfahren nach einem der Ansprüche 1 bis 7, wobei die Grundgesamtleistung (P_Netz_0) einen konstanten Wert aufweist, wobei dann, wenn keine Regelleistung angefordert ist und/oder die PV-Maximalleistung (P_MPP) größer als die Grundgesamtleistung (P_Netz_0) ist, die Grundgesamtleistung (P_Netz_0) ausschließlich PV-Leistung (P_PV) umfasst, und wobei dann eine Differenz zwischen der aktuellen PV-Leistung (P_PV) und der Grundgesamtleistung (P_Netz_0) durch Austausch elektrischer Leistung (P_Batt) mit dem Energiespeicher (5) ausgeglichen wird.

9. Verfahren nach einem der vorangehenden Ansprüche 1 bis 8, wobei der Photovoltaikgenerator (4) und der Energiespeicher (5) ihre jeweilige elektrische Leistung (P_PV, P_Batt) über verschiedene, räumlich getrennte Netzanschlusspunkte (1a, 1b) mit dem Wechselspannungsnetz (1) austauschen.

10. Verfahren nach einem der vorangehenden Ansprüche, wobei die Energieerzeugungsanlage (2) mindestens zwei Energiespeicher (51, 52) aufweist, wobei der Photovoltaikgenerator (4) und der erste Energiespeicher (51) Regelleistung für eine Primärregelung des Wechselspannungsnetzes (1) bereitstellen, wobei der zweite Energiespeicher (52) Regelleistung für eine Momentanregelung des Wechselspannungsnetzes (1) bereitstellt, wobei der zweite Energiespeicher (52) insbesondere eine Momentanregelleistung (P_Moment) über einen spannungseinprägenden Wechselrichter (52a) mit dem Wechselspannungsnetz (1) austauscht.

11. Energieerzeugungsanlage (2) zur Bereitstellung von Regelleistung für ein Wechselspannungsnetz (1) mit einem Photovoltaikgenerator (4), einem Energiespeicher (5,51,52) und einer Steuerungseinheit (9), wobei die Steuerungseinrichtung dazu eingerichtet ist, die Energieerzeugungsanlage (2) mit einem Verfahren gemäß einem der vorangehenden Ansprüche zu betreiben.

12. Energieerzeugungsanlage (2) nach Anspruch 11, wobei der Photovoltaikgenerator (4) und der Energiespeicher (5,51,52) über einen gemeinsamen Netzanschlusspunkt mit dem Wechselspannungsnetz (1) verbunden sind.

13. Energieerzeugungsanlage (2) nach einem der Ansprüche 11 oder 12, wobei mehrere Photovoltaikgeneratoren (4) und/oder mehrere Energiespeicher (5,51,52) über einen gemeinsamen bidirektionalen Wechselrichter mit dem Netzanschlusspunkt verbunden sind, wobei der Wechselrichter bevorzugt über individuelle Gleichstromwandler mit den Photovoltaikgeneratoren (4) bzw. den Energiespeichern (5,51,52) verbunden ist.

14. Energieerzeugungsanlage (2) nach Anspruch 11, wobei die Steuerungseinheit (9) kommunikativ über eine indirekte Verbindung über ein Netzwerk mit dem Photovoltaikgenerator (4) und dem Energiespeicher (5,51,52) verbunden ist, wobei der Photovoltaikgenerator (4) und der Energiespeicher (5,51,52) über verschiedene, räumlich getrennte Netzanschlusspunkte mit dem Wechselspannungsnetz (1) verbunden sind.

15. Energieerzeugungsanlage (2) nach einem der Ansprüche 11 bis 14, wobei die Energieerzeugungsanlage (2) mehrere Energiespeicher (5,51,52) unterschiedlicher Bauart umfasst, wobei bevorzugt mindestens einer der Energiespeicher (5,51,52) einen Lithium-Ionen-Akkumulator und besonders bevorzugt mindestens einer der Energiespeicher (5,51,52) einen Superkondensator umfasst ist.

## Claims

1. A method for providing balancing power for an AC voltage grid (1) for a predetermined future period of time with a balancing power range by means of an energy generation system (2), wherein the energy generation system (2) comprises a photovoltaic generator (4) and an energy store (5),wherein the energy generation system (2) exchanges a total electrical power (P_Netz) with the AC voltage grid (1),
wherein the total power (P_Netz) exchanged is set as a function of a current maximum PV power (P_MPP), a predefinable basic PV power (P_PV _0) between zero and the maximum PV power (P_MPP) and a provided or requested balancing power,
wherein the balancing power range has a maximum positive balancing power and a maximum negative balancing power, which can be set as deviations from the total basic power (P_Grid_0) in the predetermined future period of time by the energy generation system (2) and are set on demand
wherein the method comprises the following steps:
- Determination of an optimal balancing power range for the predetermined future period of time, taking into account the current maximum PV power (P_MPP) and the current state of charge (SOC) of the energy store (5)
- if no balancing power is requested: feeding in a total basic power (P_Netz_0), which comprises the basic PV power (P_PV_0);
- if negative balancing power is requested: reducing the PV power (P_PV) compared to the basic PV power (P_PV_0);
- if positive balancing power is requested: drawing a battery power (P_Batt) from the energy store (5) if the requested positive balancing power is greater than the difference between the maximum PV power (P_MPP) and the basic PV power (P_PV_0).

2. The method as claimed in claim 1, wherein reducing the PV power (P_PV) to provide negative balancing power comprises feeding back into the photovoltaic generator (4).

3. The method as claimed in claim 1 or 2, wherein the total basic power (P_Netz_0) contains a battery power (P_Batt) for charging the energy store (5) if the energy store (5) can be charged and/or wherein the battery power (P_Batt) for charging the energy store (5) is first increased if negative balancing power is requested and the energy store (5) can be charged.

4. The method as claimed in one of claims 1 to 3, wherein the basic PV power (P_PV_0) corresponds to the maximum PV power (P_MPP) or is proportional to it, so that any variations in the maximum PV power (P_MPP) lead to corresponding variations in the total basic power (P_Grid_0).

5. The method as claimed in one of claims 1 to 3, wherein the basic PV power (P_PV_0) is lower than the maximum PV power (P_MPP), and in particular is between 40% and 60% of the maximum PV power (P_MPP), wherein the PV power (P_PV) is increased compared to the basic PV power (P_PV_0) if positive balancing power is requested, and additional drawing of a battery power (P_Batt) from the energy store (5) if the requested positive balancing power is greater than the difference between the basic PV power (P_PV _0) and the maximum PV power (P_MPP), so that the total power (P_Netz) includes the requested positive balancing power.

6. The method as claimed in one of the preceding claims, wherein the requested balancing power is determined as a function of a deviation of an instantaneous frequency (f_netz) from a nominal frequency (f_Nenn) of the AC voltage grid (1) and/or a rate of change of the instantaneous frequency (f_netz) by means of a characteristic curve, wherein positive balancing power is requested if the instantaneous frequency (f_netz) is lower than the nominal frequency (f_Nenn) and/or the rate of change is negative, and wherein negative balancing power is requested when the instantaneous frequency (f_netz) is greater than the nominal frequency (f_Nenn) and/or the rate of change is positive.

7. The method as claimed in one of claims 1 to 5, wherein the requested balancing power is predefined to the energy generation system (2) by a superordinate controller.

8. The method as claimed in one of claims 1 to 7, wherein the total basic power (P_Netz_0) has a constant value, wherein, if no balancing power is requested and/or the maximum PV power (P_MPP) is greater than the total basic power (P_Netz_0), the total basic power (P_Netz_0) exclusively comprises PV power (P_PV), and wherein a difference between the current PV power (P_PV) and the total basic power (P_Netz_0) is then compensated for by exchanging electrical power (P_Batt) with the energy store (5).

9. The method as claimed in one of the preceding claims 1 to 8, wherein the photovoltaic generator (4) and the energy store (5) exchange their respective electrical power (P_PV, P_Batt) with the AC voltage grid (1) via different, physically separated grid connection points (1a, 1b).

10. The method as claimed in one of the preceding claims, wherein the energy generation system (2) has at least two energy stores (51, 52), wherein the photovoltaic generator (4) and the first energy store (51) provide balancing power for primary control of the AC voltage grid (1), wherein the second energy store (52) provides balancing power for instantaneous control of the AC voltage grid (1), wherein the second energy store (52) especially exchanges an instantaneous balancing power (P_Moment) with the AC voltage grid (1) via a voltage-impressing inverter (52a).

11. An energy generation system (2) for providing balancing power for an AC voltage grid (1) with a photovoltaic generator (4), an energy store (5, 51, 52) and a control unit (9), wherein the control unit (9) is set up to operate the energy generation system (2) using a method as claimed in one of the preceding claims.

12. The energy generation system (2) as claimed in claim 11, wherein the photovoltaic generator (4) and the energy store (5, 51, 52) are connected to the AC voltage grid (1) via a common grid connection point.

13. The energy generation system (2) as claimed in one of claims 11 or 12, wherein a plurality of photovoltaic generators (4) and/or a plurality of energy stores (5, 51, 52) are connected to the grid connection point via a common bidirectional inverter, wherein the inverter is preferably connected to the photovoltaic generators (4) or the energy stores (5, 51, 52) via individual direct current converters.

14. The energy generation system (2) as claimed in claim 11, wherein the control unit (9) is communicatively connected via an indirect connection via a network to the photovoltaic generator (4) and the energy store (5, 51, 52), wherein the photovoltaic generator (4) and the energy store (5, 51, 52) are connected to the AC voltage grid (1) via different, physically separated grid connection points.

15. The energy generation system (2) as claimed in one of claims 11 to 14, wherein the energy generation system (2) comprises a plurality of energy stores (5, 51, 52) of different designs, wherein preferably at least one of the energy stores (5, 51, 52) is comprises a lithium-ion accumulator and particularly preferably at least one of the energy stores (5, 51, 52) is comprises a supercapacitor.

## Revendications

1. Procédé pour fournir une puissance de réglage à un réseau à tension alternative (1) pendant une période future prédéfinie avec une plage de puissance de réglage au moyen d'une installation de production d'énergie (2), l'installation de production d'énergie (2) comprenant un générateur photovoltaïque (4) et un accumulateur d'énergie (5),
l'installation de production d'énergie (2) échangeant une puissance électrique totale (P_Netz) avec le réseau à tension alternative (1),
la puissance totale échangée (P_Netz) étant réglée en fonction d'une puissance PV maximale actuelle (P_MPP), d'une puissance PV de base prédéfinissable (P_PV_0) comprise entre zéro et la puissance PV maximale (P_MPP) et d'une puissance de régulation fournie ou demandée,
la plage de puissance de réglage présentant une puissance de réglage positive maximale et une puissance de réglage négative maximale qui peuvent être réglées comme écarts par rapport à la puissance totale de base (P_Netz_0) dans la période future prédéfinie par l'installation de production d'énergie (2) et qui sont réglées sur demande,
le procédé comprenant les étapes suivantes :
- détermination d'une plage de puissance de réglage optimale pour la période future prédéfinie en tenant compte de la puissance PV maximale actuelle (P_MPP) et d'un état de charge actuel (SOC) du système de stockage d'énergie (5),
- si aucune puissance de régulation n'est demandée : alimentation d'une puissance totale de base (P_Netz_0) qui comprend la puissance PV de base (P_PV_0);
- si une puissance de régulation négative est demandée : réduction de la puissance PV (P_PV) par rapport à la puissance PV de base (P_PV_0) ;
- si une puissance de réglage positive est demandée : prélèvement d'une puissance de batterie (P_Batt) à partir du dispositif de stockage d'énergie (5) lorsque la puissance de réglage positive demandée est supérieure à la différence entre la puissance PV maximale (P_MPP) et la puissance PV de base (P_PV_0).

2. Procédé selon la revendication 1, dans lequel la réduction de la puissance PV (P_PV) pour fournir une puissance de régulation négative comprend une réinjection dans le générateur photovoltaïque (4).

3. Procédé selon la revendication 1 ou 2, dans lequel la puissance de base totale (P_Netz_0) comprend une puissance de batterie (P_Batt) pour charger le dispositif de stockage d'énergie (5) lorsque le dispositif de stockage d'énergie (5) peut être chargé, et/ou dans lequel la puissance de batterie (P_Batt) est d'abord augmentée pour charger le dispositif de stockage d'énergie (5) lorsqu'une puissance de réglage négative est demandée et que le dispositif de stockage d'énergie (5) peut être chargé.

4. Procédé selon l'une des revendications 1 à 3, dans lequel la puissance PV de base (P_PV_0) correspond à la puissance PV maximale (P_MPP) ou est proportionnelle à celle-ci, de sorte que les variations éventuelles de la puissance PV maximale (P_MPP) entraînent des variations correspondantes de la puissance totale de base (P_Netz_0).

5. Procédé selon l'une des revendications 1 à 3, dans lequel la puissance PV de base (P_PV_0) est inférieure à la puissance PV maximale (P_MPP) et s'élève en particulier entre 40 % et 60 % de la puissance PV maximale (P_MPP), la puissance PV (P_PV) étant augmentée par rapport à la puissance PV de base (P_PV_0) lorsqu'une puissance de régulation positive est requise, et un prélèvement supplémentaire d'une puissance de batterie (P_Batt) étant effectué à partir du dispositif de stockage d'énergie (5) lorsque la puissance de régulation positive demandée est supérieure à la différence entre la puissance PV de base (P_PV_0) et la puissance PV maximale (P_MPP), de sorte que la puissance totale (P_Netz) comprend la puissance de régulation positive demandée.

6. Procédé selon l'une des revendications précédentes, dans lequel la puissance de régulation demandée est déterminée en fonction d'un écart entre une fréquence instantanée (f_Netz) et une fréquence nominale (f_nom) du réseau à tension alternative (1) et/ou d'un taux de variation de la fréquence instantanée (f_Netz) au moyen d'une courbe caractéristique, une puissance de régulation positive étant demandée lorsque la fréquence instantanée (f_Netz) est inférieure à la fréquence nominale (f_nom) et/ou que le taux de variation est négatif, et une puissance de régulation négative étant demandée lorsque la fréquence instantanée (f_Netz) est supérieure à la fréquence nominale (f_nom) et/ou que le taux de variation est positif.

7. Procédé selon l'une des revendications 1 à 5, la puissance de régulation demandée étant prédéfinie par une commande supérieure à l'installation de production d'énergie (2).

8. Procédé selon l'une des revendications 1 à 7, dans lequel la puissance totale de base (P_Netz_0) a une valeur constante, dans lequel, lorsqu'aucune puissance de régulation n'est demandée et/ou que la puissance PV maximale (P_MPP) est supérieure à la puissance totale de base (P_Netz_0), la puissance totale de base (P_Netz_0) comprend exclusivement la puissance PV (P_PV), et dans lequel une différence entre la puissance PV actuelle (P_PV) et la puissance totale de base (P_Netz_0) est alors compensée par l'échange de puissance électrique (P_Batt) avec le dispositif de stockage d'énergie (5).

9. Procédé selon l'une des revendications 1 à 8 précédentes, dans lequel le générateur photovoltaïque (4) et le dispositif de stockage d'énergie (5) échangent leur puissance électrique respective (P_PV, P_Batt) avec le réseau à tension alternative (1) via différents points de raccordement au réseau (1a, 1b) séparés dans l'espace.

10. Procédé selon l'une des revendications précédentes, dans lequel l'installation de production d'énergie (2) comprend au moins deux accumulateurs d'énergie (51, 52), le générateur photovoltaïque (4) et le premier accumulateur d'énergie (51) fournissant une puissance de régulation pour une régulation primaire du réseau à tension alternative (1) , le deuxième accumulateur d'énergie (52) fournissant une puissance de régulation pour une régulation instantanée du réseau à tension alternative (1), le deuxième accumulateur d'énergie (52) échangeant en particulier une puissance de régulation instantanée (P_Moment) avec le réseau à tension alternative (1) via un onduleur (52a) imposant une tension.

11. Installation de production d'énergie (2) destinée à fournir une puissance de régulation pour un réseau à tension alternative (1), comprenant un générateur photovoltaïque (4), un accumulateur d'énergie (5, 51, 52) et une unité de commande (9), le dispositif de commande étant conçu pour faire fonctionner l'installation de production d'énergie (2) selon un procédé conforme à l'une des revendications précédentes.

12. Installation de production d'énergie (2) selon la revendication 11, dans laquelle le générateur photovoltaïque (4) et le dispositif de stockage d'énergie (5, 51, 52) sont reliés au réseau à tension alternative (1) par l'intermédiaire d'un point de raccordement commun au réseau.

13. Installation de production d'énergie (2) selon l'une des revendications 11 ou 12, dans laquelle plusieurs générateurs photovoltaïques (4) et/ou plusieurs accumulateurs d'énergie (5, 51, 52) sont reliés au point de raccordement au réseau par l'intermédiaire d'un onduleur bidirectionnel commun, l'onduleur étant de préférence relié aux générateurs photovoltaïques (4) ou aux accumulateurs d'énergie (5, 51, 52)via convertisseurs de courant continu individuels.

14. Installation de production d'énergie (2) selon la revendication 11, dans laquelle l'unité de commande (9) est reliée de manière communicative au générateur photovoltaïque (4) et au dispositif de stockage d'énergie (5, 51, 52) via une connexion indirecte par l'intermédiaire d'un réseau, le générateur photovoltaïque (4) et le dispositif de stockage d'énergie (5, 51, 52) étant reliés au réseau à tension alternative (1) via différents points de raccordement au réseau séparés dans l'espace.

15. Installation de production d'énergie (2) selon l'une des revendications 11 à 14, dans laquelle l'installation de production d'énergie (2) comprend plusieurs accumulateurs d'énergie (5, 51, 52) de types différents, dans laquelle, de préférence, au moins l'un des accumulateurs d'énergie (5, 51, 52) comprend un accumulateur lithium-ion et, de manière particulièrement préférée, au moins l'un des accumulateurs d'énergie (5, 51, 52) comprend un supercondensateur.
